# FASCICULE DE BREVET EUROPEEN

(11) **EP 3 065 985 B1**
(45) Date de publication et mention de la délivrance du brevet: **15.08.2018**
(21) Numéro de dépôt: 14761647.8
(22) Date de dépôt: 09.09.2014
(51) Int. Cl.: B60W 30/06, B60W 40/08, B60W 50/14, B60W 50/00

(54) **PROCÉDÉ DE SÉCURISATION D'UNE COMMANDE À DISTANCE D'UN VÉHICULE AUTOMOBILE PAR UN TERMINAL MOBILE**
VERFAHREN ZUR HERSTELLUNG EINER FERNBEDIENTEN STEUERUNG EINES KRAFTFAHRZEUGS UNTER VERWENDUNG EINES MOBILEN ENDGERÄTS
METHOD FOR MAKING A REMOTELY OPERATED CONTROL OF A MOTOR VEHICLE SECURE USING A MOBILE TERMINAL

(30) Priorité: 09.09.2013 FR 1302105
(43) Date de publication de la demande: 14.09.2016
(73) Titulaire: Valeo Comfort and Driving Assistance, 94046 Créteil Cedex (FR)
(72) Inventeur: PETEL, Laurent, 94046 Créteil Cedex (FR)
(74) Mandataire: Delplanque, Arnaud
(86) Numéro de dépôt international: PCT/EP2014/069189
(87) Numéro de publication internationale: WO 2015/032976

(56) Documents cités:
- EP-A1- 2 295 281
- EP-A2- 2 316 709
- DE-A1-102011 079 703
- JP-A- 2007 295 033

## Description

La présente invention se situe dans le domaine technique des véhicules automobiles et plus particulièrement concerne un procédé de sécurisation d'une commande à distance d'une manoeuvre d'un véhicule automobile au moyen d'un terminal mobile.

Il est de plus en plus répandu dans le domaine automobile de pouvoir commander à distance certaines fonctions d'un véhicule automobile au moyen d'un terminal mobile comme par exemple un téléphone portable ou un ordiphone en liaison sécurisée avec ledit véhicule automobile. Cependant, pour des raisons de sécurité, il est nécessaire de s'assurer que l'utilisateur est en vue de son véhicule avant d'enclencher certaines commandes particulières.

Cela est particulièrement le cas pour des commandes à distance déclenchant une manoeuvre, automatique ou pilotée par l'utilisateur, du véhicule automobile. Par exemple, cette commande peut être une manoeuvre automatique afin de garer le véhicule alors que l'utilisateur est à l'extérieur de ce dernier et l'interrompre en cas d'urgence, par exemple à l'approche d'un cycliste ou d'enfants qui n'étaient pas présent lors de l'enclenchement de la commande.

Il est connu d'estimer la distance entre le véhicule automobile et le terminal mobile en fonction de l'intensité du signal de communication, par exemple radiofréquence ou Bluetooth©, les reliant. Cependant cette méthode n'est pas satisfaisante car elle ne permet pas de s'assurer que l'utilisateur est bien en vue du véhicule automobile.

Un des buts de l'invention est donc de fournir un procédé de sécurisation d'une commande à distance d'une manoeuvre d'un véhicule automobile par un terminal mobile sécurisée où l'on est certain que l'utilisateur est en vue du véhicule automobile.

La présente invention concerne donc un procédé de sécurisation d'une commande à distance d'une manoeuvre d'un véhicule automobile par un terminal mobile selon la revendication 1. Selon l'invention, le procédé de sécurisation comporte les étapes suivantes:
- enclenchement d'une commande à distance d'une manoeuvre du véhicule automobile par un utilisateur via le terminal mobile,
- vérification que l'utilisateur est en visu du véhicule automobile au moyen du terminal mobile,
- si la vérification est positive et montre que l'utilisateur est en visu du véhicule automobile, ladite commande à distance d'une manoeuvre du véhicule automobile est exécutée, sinon ladite commande est inhibée.

Le procédé de sécurisation d'une commande à distance d'une manoeuvre d'un véhicule automobile par un terminal mobile selon l'invention, permet de s'assurer que l'utilisateur est en vue du véhicule automobile avant le déclenchement de ladite manoeuvre. Cela permet ainsi d'augmenter la sécurité du déroulement de la manoeuvre car l'utilisateur peut à tout moment exercer un contrôle visuel du bon déroulement de cette dernière.

Selon l'invention, la vérification que l'utilisateur est en visu du véhicule automobile au moyen du terminal mobile, comporte les étapes suivantes :
- génération aléatoire d'une séquence de signaux visuels, ladite séquence de signaux visuels étant produite par le véhicule automobile grâce à des moyens de signaux visuels commandés par une unité de contrôle, et enregistrement d'un résultat représentatif de la séquence de signaux visuels produite,
- saisie par l'utilisateur sur le terminal mobile d'une représentation qu'il perçoit de la séquence de signaux visuels produite par le véhicule automobile,
- comparaison du résultat représentatif de la séquence de signaux visuels produite et du résultat représentatif de la séquence de signaux visuels saisie,
- si les résultats représentatifs de la séquence de signaux visuels produite et saisie sont identiques, ladite commande à distance d'une manoeuvre du véhicule automobile est exécutée, sinon ladite commande est inhibée.

Selon un autre aspect de l'invention, préalablement à la génération d'une séquence de signaux visuels, la position relative de l'utilisateur par rapport au véhicule automobile est déterminée et la génération de la séquence de signaux visuels tient compte de ladite position relative de l'utilisateur par rapport au véhicule automobile.

Selon un autre aspect de l'invention, la position relative de l'utilisateur par rapport au véhicule automobile est déterminée en fonction du type de manoeuvre du véhicule automobile enclenché par l'utilisateur.

Selon un autre aspect de l'invention, la position relative de l'utilisateur par rapport au véhicule automobile est déterminée par saisie par l'utilisateur de sa position relative par rapport au véhicule automobile via le terminal mobile et envoi de ladite position relative à l'unité de contrôle.

Selon un autre aspect de l'invention, la génération d'une séquence de signaux visuels est générée par le terminal mobile et transmise à l'unité de contrôle qui la reproduit.

Selon un autre aspect de l'invention, la génération d'une séquence de signaux visuels est réalisée par l'unité de contrôle dudit véhicule automobile.

Selon un autre aspect de l'invention, la comparaison du résultat représentatif de la séquence de signaux visuels produite et du résultat représentatif de la séquence de signaux visuels saisie est réalisée par le terminal mobile.

Selon un autre aspect de l'invention, la comparaison du résultat représentatif de la séquence de signaux visuels produite et du résultat représentatif de la séquence de signaux visuels saisie est réalisée par l'unité de contrôle dudit véhicule automobile.

Selon un autre aspect de l'invention, la séquence de signaux visuels produite par le véhicule automobile est une combinaison de flashs lumineux générés par les feux de signalisation dudit véhicule automobile.

D'autres caractéristiques et avantages de l'invention apparaîtront plus clairement à la lecture de la description suivante, donnée à titre d'exemple illustratif et non limitatif, parmi lesquelles :
- la figure 1 montre une représentation schématique d'une scène d'application du procédé selon l'invention, et
- la figure 2 est un organigramme des étapes du procédé de sécurisation selon un mode de réalisation particulier.

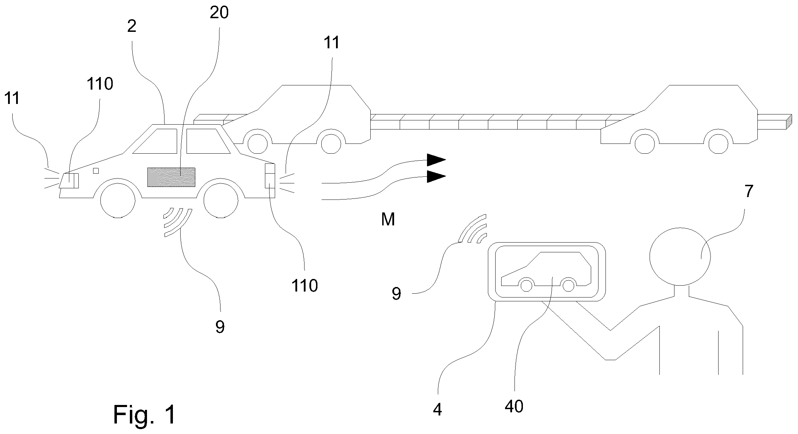

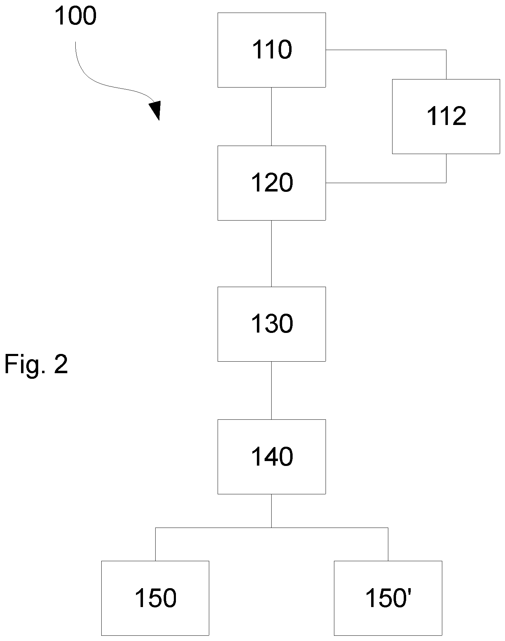

En référence aux figures 1 et 2, la présente invention concerne donc un procédé 100 de sécurisation d'une commande à distance d'une manoeuvre d'un véhicule automobile 2 au moyen d'un terminal mobile. Une telle commande à distance de manoeuvre peut notamment être une commande d'une manoeuvre représentée par la légende M automatique ou pilotée afin de garer le véhicule automobile 2 à l'aide d'un système automatique réalisant cette manoeuvre M alors que l'utilisateur 7 n'est pas au volant comme illustré sur la figure 1.

On entend par terminal mobile 4 tout appareil mobile, porté par un utilisateur 7 et pouvant communiquer avec le véhicule automobile 2 par exemple au moyen d'une connexion Bluetooth© ou radiofréquence. Un tel terminal mobile 4 peut notamment être un ordiphone (ou « smartphone » en anglais).

Dans le procédé décrit ci-dessous, on suppose que le terminal mobile 4 et le véhicule automobile 2 sont en communication l'un avec l'autre au moyen d'une liaison sans fil 9 de type radiofréquence ou Bluetooth© et peuvent s'échanger des informations et signaux. Cette liaison sans fil 9 est de préférence sécurisée, par exemple le terminal mobile 4 étant identifié auprès du véhicule automobile 2 et inversement.

Une première étape 110 du procédé 100 de sécurisation d'une commande à distance d'une manoeuvre d'un véhicule automobile 2 est une étape d'enclenchement de la commande à distance de la manoeuvre M désirée par l'utilisateur 7 au moyen du terminal mobile 4.

En réponse à cette première étape 110, une vérification que l'utilisateur 7 est en visu du véhicule automobile 2 au moyen du terminal mobile 4, est effectuée.

Si la vérification est positive et montre que l'utilisateur 7 est en visu du véhicule automobile 2, ladite commande à distance d'une manoeuvre M du véhicule automobile 2 est exécutée, sinon ladite commande est inhibée. Cette vérification permet ainsi d'augmenter la sécurité du déroulement de la manoeuvre M car l'utilisateur 7 peut à tout moment exercer un contrôle visuel du bon déroulement de cette dernière.

Selon un premier mode réalisation, illustré à la figure 2, la vérification que l'utilisateur 7 est en visu du véhicule automobile 2 au moyen du terminal mobile 4, est réalisée au moyen de la reproduction par l'utilisateur 7 sur le terminal mobile 4 d'une séquence de signaux visuels 11 émise par le véhicule automobile 2. Les moyens de signaux visuels 110 du véhicule automobile peuvent par exemple être les feux de signalisation, clignotants. La séquence de signaux visuels 11 produite peut ainsi notamment être une combinaison de flashs lumineux générés par les feux de signalisation dudit véhicule automobile 2.

En réponse à la commande enclenchée via le terminal mobile 4, une séquence de signaux visuels 11 est générée aléatoirement et produite par le véhicule automobile 2 grâce à des moyens de signaux visuels 110, lors d'une seconde étape 120.

La séquence de signaux visuels 11 peut être générée directement par le terminal mobile 4 et transmise ensuite vers le véhicule automobile 2 afin qu'il la reproduise.

A contrario, l'enclenchement de commande peut être envoyé directement depuis le terminal mobile 4 à une unité de contrôle 20 du véhicule automobile 2. La séquence de signaux visuels 11 peut être générée par l'unité de contrôle 20 qui est capable de contrôler les moyens de signaux visuels 110.

Un résultat représentatif de la séquence de signaux visuels 11 produite est également enregistré. Cet enregistrement peut être réalisé par le terminal mobile 4 ou bien par l'unité de contrôle 20.

La séquence de signaux visuels 11 produite peut être une combinaison de signaux visuels dont la localisation sur le véhicule automobile 2 peut varier en fonction de la localisation des moyens de signaux visuels 110. Par exemple, dans le cas de flashs lumineux, la séquence de signaux visuels 11 peut être une combinaison où les feux de signalisations avants, arrières, droits et gauches s'allument et s'éteignent alternativement.

La séquence de signaux visuels 11 produite peut également jouer sur la durée des signaux visuels émis et varier entre des signaux visuels courts et longs par exemple.

Afin de générer une séquence de signaux visuels 11 pertinente, il peut être nécessaire de connaitre la position de l'utilisateur 7 par rapport au véhicule automobile 2. En effet, selon le placement de l'utilisateur 7 par rapport au véhicule automobile 2, ce dernier peut ne pas avoir en visuel l'ensemble des moyens de signaux visuels 110. Le procédé peut ainsi comporter, préalablement à la seconde étape 120, une étape intermédiaire 112 de détermination de la position relative de l'utilisateur 7 par rapport au véhicule automobile 2.

La détermination de la position relative de l'utilisateur 7 peut être réalisée en fonction du type de manoeuvre M enclenché par l'utilisateur. En effet, par exemple, lors de l'enclenchement d'une manoeuvre de créneau afin de garer le véhicule automobile 2 automatiquement, l'utilisateur doit se placer sur un des cotés dudit véhicule automobile 2, comme illustré sur la figure 1. Il est donc en visu des feux de signalisation avant et arrière sur un seul des flancs du véhicule automobile 2. La séquence de signaux visuels 11 produite peut ainsi être une combinaison de flashs lumineux au moyen d'une alternance entre les feux de signalisations avant et arrière du véhicule automobile 2. Il peut s'agir en alternative du mouvement d'un organe du véhicule comme le rétroviseur, la vitre ou la roue.

De même, par exemple, lors de l'enclenchement d'une manoeuvre M afin de garer le véhicule automobile 2 en épis ou en bataille, l'utilisateur 7 doit se placer en face de l'avant ou de l'arrière de ce dernier. La séquence de signaux visuels 11 produite peut ainsi être une combinaison de flashs lumineux au moyen d'une alternance entre les feux de signalisations gauche et droit du véhicule automobile 2.

La détermination de la position relative de l'utilisateur 7 peut également être réalisée par saisie directe de ladite position relative sur le terminal mobile 4. L'utilisateur 7 peut ainsi, via le terminal mobile 4, indiquer sa position, par exemple en indiquant par un appui sur un écran tactile sa position relative par rapport à une représentation du véhicule automobile 2 ou alors en indiquant quels moyens de signaux visuels 110 il a en visu.

Suite à la seconde étape 120 de génération aléatoire d'une séquence de signaux visuels 11, de production de cette séquence et de son enregistrement, l'utilisateur 7 saisie, lors d'une troisième étape 130, sur le terminal mobile 4 une représentation de la séquence de signaux visuels 11 produits par le véhicule automobile. Cette saisie s'effectue, par exemple, par appuis sur un écran tactile et reproduction de ladite séquence sur une représentation 40 du véhicule automobile 2. Un autre moyen de saisie pourrait consister à cocher des cases correspondantes à l'identification de chaque éléments ayant produit un signal visuel. Dans un autre mode de réalisation la saisie pourrait être remplacée par une commande vocale indiquant la suite de signaux visuels produits.

Dans un mode de réalisation alternatif, la saisie peut être réalisée en corrélation des signaux visuels produits, c'est-à-dire une saisie à la suite d'un ou plusieurs signaux qui composent la séquence. Ceci permet d'inhiber la commande dès qu'une erreur se produit.

Lors d'une quatrième étape 140, les résultats représentatifs de la séquence de signaux visuels 11 produite par le véhicule automobile 2 et de la séquence de signaux visuels saisie par l'utilisateur 7 sont comparés.

Cette comparaison peut-être réalisée aussi bien par le terminal mobile 4 ou alors par l'unité de contrôle 20.

Si les résultats représentatifs de la séquence de signaux visuels 11 produite et saisie sont identiques, la commande à distance d'une manoeuvre M du véhicule automobile 2 est exécutée, lors d'une cinquième étape 150.

Si les résultats représentatifs de la séquence de signaux visuels 11 produite et saisie diffèrent, la commande à distance d'une manoeuvre M du véhicule automobile 2 est inhibée, lors d'une cinquième étapes 150'.

L'inhibition de la commande à distance d'une manoeuvre M du véhicule automobile 2 est de préférence réalisée par l'unité de contrôle 20 qui peut simplement ne pas exécuter la commande.

Nous allons maintenant montrer un exemple concret d'application du procédé 100 de sécurisation d'une commande à distance d'une manoeuvre M d'un véhicule automobile 2 par un terminal mobile 4 selon l'invention et comme illustré à la figure 1.

Dans un premier temps, l'utilisateur 7, au volant de son véhicule automobile 2, arrive au niveau d'une place de stationnement ici en créneau et place son véhicule automobile 2 afin de le garer.

L'utilisateur 7 sort de son véhicule automobile 2 et enclenche une manoeuvre M automatique de stationnement via son terminal mobile 4. Dans un premier temps, l'utilisateur 7 indique sur le terminal mobile 4 les moyens de signaux visuels 110 qu'il a en visu.

A partir de cette information, une séquence de signaux visuels 110 est générée et produite par le véhicule automobile 2. Cette séquence de signaux visuels 110 comportant par exemple deux flashs lumineux des feux avant suivit d'un flash lumineux des feux arrière et de nouveau d'un flash lumineux des feux avant.

L'utilisateur 7 reproduit cette séquence de signaux visuels 11 en la reproduisant par appuis sur une reproduction 40 du véhicule automobile 2 affichée sur l'écran du terminal mobile 4.

La séquence de signaux visuels 11 produite par le véhicule automobile 2 et celle saisie par l'utilisateur 7 sur son terminal mobile 4 sont comparées. Si les deux séquences diffèrent, le véhicule automobile 2 ne bouge pas et un message d'erreur peut être affiché sur le terminal mobile 4. Une nouvelle séquence de signaux visuels 11 peut être produite par le véhicule automobile 2 et une nouvelle saisie demandée à l'utilisateur 7. Si les deux séquences correspondent, le véhicule automobile 2 effectue la manoeuvre M de stationnement demandée.

Selon un exemple alternatif ne faisant pas partie de l'invention, la vérification que l'utilisateur 7 est en visu du véhicule automobile 2 au moyen du terminal mobile 4, est réalisée au moyen d'un capteur optique du terminal mobile 4 et prise de vue d'un élément distinctif du véhicule automobile 4.

Afin de confirmer qu'il est bien en visu du véhicule automobile 2, l'utilisateur 7 peut utiliser une fonction de prise de vue au moyen d'un capteur optique présent sur le terminal mobile 4, par exemple la fonction « photo », afin de capter un élément distinctif du véhicule automobile 2, par exemple la plaque d'immatriculation, préalablement enregistré et identifié. Le terminal mobile 4, au moyen d'un logiciel de reconnaissance peut ainsi reconnaitre la prise de vue effectuée et confirmer ou non que l'utilisateur 7 est en visu du véhicule automobile 2.

Selon un autre exemple alternatif ne faisant pas partie de l'invention, la vérification que l'utilisateur 7 est en visu du véhicule automobile 2 au moyen du terminal mobile 4, est réalisée au moyen d'un signal laser émit par le terminal mobile 4. Le signal laser, par exemple un faisceau laser de type Infrarouge ou visible, est émit par le terminal mobile 4 et, si l'utilisateur est en visu du véhicule automobile 2, ledit véhicule automobile 2 capte le signal laser au moyen d'un récepteur adapté.

Le signal laser peut être émit après l'émission de la commande à distance de la manoeuvre M vers le véhicule automobile 2. Ainsi ce dernier peut vérifier que l'utilisateur 7 est en visu du véhicule automobile 2 et effectuer la manoeuvre M qui lui a été commandé.

Selon une variante, le signal laser peut être émit avant l'envoi de la commande à distance de la manoeuvre M au véhicule automobile 2. Ce dernier envoi alors un signal de confirmation de réception du signal laser au terminal mobile 4 qui alors peut vérifier que l'utilisateur 7 est en visu du véhicule automobile 2 et envoyer la commande à distance de la manoeuvre M au véhicule automobile 2 qui peut effectuer la manoeuvre M.

Ainsi, on voit bien que le procédé de sécurisation d'une commande à distance d'une manoeuvre d'un véhicule automobile par un terminal mobile selon l'invention, permet de s'assurer que l'utilisateur est en vue du véhicule automobile avant le déclenchement de ladite manoeuvre. Cela permet ainsi d'augmenter la sécurité du déroulement de la manoeuvre car l'utilisateur peut à tout moment exercer un contrôle visuel du bon déroulement de cette dernière et l'interrompre en cas d'urgence, par exemple à l'approche d'un cycliste ou d'enfants qui n'étaient pas présent lors de l'enclenchement de la commande.

## Revendications

1. Procédé de sécurisation d'une commande à distance d'une manoeuvre (M) d'un véhicule automobile (2) par un terminal mobile (4), comportant les étapes suivantes :
- enclenchement d'une commande à distance d'une manoeuvre (M) du véhicule automobile (2) par un utilisateur (7) via le terminal mobile (4),
- vérification que l'utilisateur (7) est en visu du véhicule automobile (2) au moyen du terminal mobile (4),
- si la vérification est positive et montre que l'utilisateur (7) est en visu du véhicule automobile (2), ladite commande à distance d'une manoeuvre (M) du véhicule automobile (2) est exécutée, sinon ladite commande est inhibée,
**caractérisé en ce que** la vérification que l'utilisateur (7) est en visu du véhicule automobile (2) au moyen du terminal mobile (4), comporte les étapes suivantes :
- génération aléatoire d'une séquence de signaux visuels (11), ladite séquence de signaux visuels (11) étant produite par le véhicule automobile (2) grâce à des moyens de signaux visuels (110) commandés par une unité de contrôle (20), et enregistrement d'un résultat représentatif de la séquence de signaux visuels (11) produite,
- saisie par l'utilisateur (7) sur le terminal mobile (4) d'une représentation qu'il perçoit de la séquence de signaux visuels (11) produite par le véhicule automobile (2),
- comparaison du résultat représentatif de la séquence de signaux visuels (11) produite et du résultat représentatif de la séquence de signaux visuels saisie,
- si les résultats représentatifs de la séquence de signaux visuels (11) produite et saisie sont identiques, ladite commande à distance d'une manoeuvre (M) du véhicule automobile (2) est exécutée, sinon ladite commande est inhibée.

2. Procédé de sécurisation selon la revendication 1, **caractérisé en ce que** préalablement à la génération d'une séquence de signaux visuels (11), la position relative de l'utilisateur (7) par rapport au véhicule automobile (2) est déterminée et que la génération de la séquence de signaux visuels (11) tient compte de ladite position relative de l'utilisateur (7) par rapport au véhicule automobile (2).

3. Procédé de sécurisation selon la revendication 2, **caractérisé en ce que** la position relative de l'utilisateur (7) par rapport au véhicule automobile (2) est déterminée en fonction du type de manoeuvre (M) du véhicule automobile (2) enclenché par l'utilisateur.

4. Procédé de sécurisation selon la revendication 2, **caractérisé en ce que** la position relative de l'utilisateur (7) par rapport au véhicule automobile (2) est déterminée par saisie par l'utilisateur (7) de sa position relative par rapport au véhicule automobile (2) via le terminal mobile (4) et envoi de ladite position relative à l'unité de contrôle (20).

5. Procédé de sécurisation selon l'une des revendications 1 à 4, **caractérisé en ce que** la génération d'une séquence de signaux visuels (11) est réalisée par le terminal mobile (4) et transmise à l'unité de contrôle (20) qui la reproduit.

6. Procédé de sécurisation selon l'une des revendications 1 à 4, **caractérisé en ce que** la génération d'une séquence de signaux visuels (11) est réalisée par l'unité de contrôle (20) dudit véhicule automobile.

7. Procédé de sécurisation selon l'une des revendications 1 à 6, **caractérisé en ce que** la comparaison du résultat représentatif de la séquence de signaux visuels (11) produite et du résultat représentatif de la séquence de signaux visuels saisie est réalisée par le terminal mobile (4).

8. Procédé de sécurisation selon l'une des revendications 1 à 6, **caractérisé en ce que** la comparaison du résultat représentatif de la séquence de signaux visuels (11) produite et du résultat représentatif de la séquence de signaux visuels saisie est réalisée par l'unité de contrôle (20) dudit véhicule automobile (2).

9. Procédé de sécurisation selon l'une des revendications 1 à 8, **caractérisé en ce que** la séquence de signaux visuels (11) produite par le véhicule automobile (2) est une combinaison de flashs lumineux générés par les feux de signalisation dudit véhicule automobile (2).

## Patentansprüche

1. Verfahren zum Absichern eines Fernsteuerungsbefehls für einen Rangierbetrieb (M) eines Kraftfahrzeugs (2) durch ein mobiles Endgerät (4), das die folgenden Schritte umfasst:
- Ausgeben eines Fernsteuerungsbefehls für einen Rangierbetrieb (M) des Kraftfahrzeugs (2) durch einen Anwender (7) über das mobile Endgerät (4),
- Verifizieren, dass der Anwender (7) das Kraftfahrzeug (2) mittels des mobilen Endgeräts (4) sieht,
- falls die Verifikation positiv ist und zeigt, dass der Anwender (7) das Kraftfahrzeug (2) sieht, Ausführen des Fernsteuerungsbefehls für einen Rangierbetrieb (M) des Kraftfahrzeugs (2), andernfalls Sperren des Befehls,
**dadurch gekennzeichnet, dass** die Verifikation, dass der Anwender (7) das Kraftfahrzeug (2) sieht, mittels des mobilen Endgeräts (4) die folgenden Schritte umfasst:
- zufälliges Erzeugen einer Folge (11) visueller Signale, wobei die Folge (11) visueller Signale durch das Kraftfahrzeug (2) anhand von Mitteln für visuelle Signale (110), die durch eine Steuereinheit (20) gesteuert werden, erzeugt wird, und Aufzeichnen eines Ergebnisses, das die erzeugte Folge (11) visueller Signale repräsentiert,
- Eingeben durch den Anwender (7) in das mobile Endgerät (4) einer Repräsentation, die er von der von dem Kraftfahrzeug (2) erzeugten Folge (11) visueller Signale wahrnimmt,
- Vergleichen des Ergebnisses, das die erzeugte Folge (11) visueller Signale repräsentiert, mit dem Ergebnis, das die eingegebene Folge visueller Signale repräsentiert,
- falls die Ergebnisse, die die erzeugte und die eingegebene Folge (11) visueller Signale repräsentieren, identisch sind, Ausführen des Fernsteuerungsbefehls für einen Rangierbetrieb (M) des Kraftfahrzeugs (2), andernfalls Sperren der Steuerung.

2. Sicherungsverfahren nach Anspruch 1, **dadurch gekennzeichnet, dass** vor der Erzeugung einer Folge (11) visueller Signale die relative Position des Anwenders (7) in Bezug auf das Kraftfahrzeug (2) bestimmt wird und dass die Erzeugung der Folge (11) visueller Signale die relative Position des Anwenders (7) in Bezug auf das Kraftfahrzeug (2) berücksichtigt.

3. Sicherungsverfahren nach Anspruch 2, **dadurch gekennzeichnet, dass** die relative Position des Anwenders (7) in Bezug auf das Kraftfahrzeug (2) als Funktion des Typs des Rangierbetriebs (M) des Kraftfahrzeugs (2), der durch den Anwender ausgegeben wird, bestimmt wird.

4. Sicherungsverfahren nach Anspruch 2, **dadurch gekennzeichnet, dass** die relative Position des Anwenders (7) in Bezug auf das Kraftfahrzeug (2) durch Eingeben durch den Anwender (7) seiner relativen Position in Bezug auf das Kraftfahrzeug (2) über das mobile Endgerät (4) und durch Schicken der relativen Position zu einer Steuereinheit (20) bestimmt wird.

5. Sicherungsverfahren nach einem der Ansprüche 1 bis 4, **dadurch gekennzeichnet, dass** die Erzeugung einer Folge (11) visueller Signale durch das mobile Endgerät (4) ausgeführt wird und die Folge an die Steuereinheit (20), die sie wiedergibt, übertragen wird.

6. Sicherungsverfahren nach einem der Ansprüche 1 bis 4, **dadurch gekennzeichnet, dass** die Erzeugung einer Folge (11) visueller Signale durch die Steuereinheit (20) des Kraftfahrzeugs ausgeführt wird.

7. Sicherungsverfahren nach einem der Ansprüche 1 bis 6, **dadurch gekennzeichnet, dass** der Vergleich des Ergebnisses, das die erzeugte Folge (11) visueller Signale repräsentiert, mit dem Ergebnis, das die eingegebene Folge visueller Signale repräsentiert, durch das mobile Endgerät (4) ausgeführt wird.

8. Sicherungsverfahren nach einem der Ansprüche 1 bis 6, **dadurch gekennzeichnet, dass** der Vergleich des Ergebnisses, das die erzeugte Folge (11) visueller Signale repräsentiert, mit dem Ergebnis, das die eingegebene Folge visueller Signale repräsentiert, durch die Steuereinheit (20) des Kraftfahrzeugs (2) ausgeführt wird.

9. Sicherungsverfahren nach einem der Ansprüche 1 bis 8, **dadurch gekennzeichnet, dass** die Folge (11) visueller Signale, die durch das Kraftfahrzeug (2) erzeugt wird, eine Kombination von Lichtblitzen ist, die durch die Blinkleuchten des Kraftfahrzeugs (2) erzeugt werden.

## Claims

1. Method for securing a remote command for manoeuvring (M) an automotive vehicle (2) by means of a mobile terminal (4), including the following steps:
- initiating a remote command for manoeuvring (M) the automotive vehicle (2) by a user (7) via the mobile terminal (4);
- verifying that the user (7) is in sight of the automotive vehicle (2) by means of the mobile terminal (4);
- if the outcome of the verification is positive and shows that the user (7) is in sight of the automotive vehicle (2), said remote command for manoeuvring (M) the automotive vehicle (2) is executed, otherwise said command is inhibited,
**characterized in that** the verification that the user (7) is in sight of the automotive vehicle (2) by means of the mobile terminal (4) includes the following steps:
- randomly generating a sequence of visual signals (11), said sequence of visual signals (11) being produced by the automotive vehicle (2) by virtue of visual signalling means (110) that are controlled by a control unit (20), and recording a result representing the sequence of visual signals (11) produced;
- the user (7) entering a perceived representation of the sequence of visual signals (11) produced by the automotive vehicle (2) into the mobile terminal (4);
- comparing the result representing the sequence of visual signals (11) produced with the result representing the sequence of visual signals entered;
- if the results representing the sequence of visual signals (11) produced and entered are identical, said remote command for manoeuvring (M) the automotive vehicle (2) is executed, otherwise said command is inhibited.

2. Securing method according to Claim 1, **characterized in that**, prior to the generation of a sequence of visual signals (11), the relative position of the user (7) with respect to the automotive vehicle (2) is determined and that the generation of the sequence of visual signals (11) takes said relative position of the user (7) with respect to the automotive vehicle (2) into account.

3. Securing method according to Claim 2, **characterized in that** the relative position of the user (7) with respect to the automotive vehicle (2) is determined according to the type of manoeuvre (M) of the automotive vehicle (2) initiated by the user.

4. Securing method according to Claim 2, **characterized in that** the relative position of the user (7) with respect to the automotive vehicle (2) is determined by the user (7) entering his or her relative position with respect to the automotive vehicle (2) via the mobile terminal (4) and sending said relative position to the control unit (20).

5. Securing method according to one of Claims 1 to 4, **characterized in that** a sequence of visual signals (11) is generated by the mobile terminal (4) and transmitted to the control unit (20), which reproduces it.

6. Securing method according to one of Claims 1 to 4, **characterized in that** a sequence of visual signals (11) is generated by the control unit (20) of said automotive vehicle.

7. Securing method according to one of Claims 1 to 6, **characterized in that** the comparison of the result representing the sequence of visual signals (11) produced with the result representing the sequence of visual signals entered is performed by the mobile terminal (4).

8. Securing method according to one of Claims 1 to 6, **characterized in that** the comparison of the result representing the sequence of visual signals (11) produced with the result representing the sequence of visual signals entered is performed by the control unit (20) of said automotive vehicle (2).

9. Securing method according to one of Claims 1 to 8, **characterized in that** the sequence of visual signals (11) produced by the automotive vehicle (2) is a combination of light flashes generated by the signalling lights of said automotive vehicle (2) .
